# EUROPÄISCHE PATENTANMELDUNG

(11) **EP 0 748 834 A1**
(43) Veröffentlichungstag der Anmeldung: **18.12.1996**
(21) Anmeldenummer: 96108628.7
(22) Anmeldetag: 30.05.1996
(51) Int. Cl.: C08J 5/18, C08L 23/10, C08K 3/36

(54) **Transparente gereckte Polyolefinfolie**

(30) Priorität: 12.06.1995 DE 19521334
(71) Anmelder: WOLFF WALSRODE AG, D-29655 Walsrode (DE)
(72) Erfinder: Benkhoff, Hermann, 27356 Rothenburg (DE)
(74) Vertreter: Braun, Rolf, Dr.

(57) **Zusammenfassung**

Die vorliegende Erfindung betrifft eine wenigstens monoaxial gereckte Polypropylenfolie, enthaltend jeweils eine Antiblockmittelkombination, wobei die Antiblockmittelkombination in einem Verhältnis von 1:1000 bis 1:20, bevorzugt 1:200 bis 3:100 eines SiO₂-Abstandshalters zu einem kugelförmigen Antiblockmittel, bestehend aus Polymerisaten des Polymethacrylsäureisobutylester und Polymethacrylsäuremethylester, zusammengesetzt ist.

## Beschreibung

Die vorliegende Erfindung betrifft eine mindestens monoaxial orientierte, transparente Polyolefinfolie, die sich wesentlich durch verbesserte Maschinengängigkeit bei gleichzeitig hervorragender Optik auszeichnet.

Transparente orientierte Polyolefinfolien werden in großen Mengen als Verpackungsmaterialien verwendet. Sie werden aber auch aufgrund ihrer guten optischen Eigenschaften in der grafischen Industrie für die Kaschierung von Druckerzeugnissen eingesetzt. Verarbeitungsprobleme können sich auf schnellaufenden vertikal und horizontal arbeitenden Verpackungs- und/oder Verarbeitungsmaschinen ergeben. Es ist allgemein bekannt, daß zur Verbesserung der entsprechenden Eigenschaften die Polyolefin-Ein- und -Mehrschichtfolien mit Antistatik-, Gleit- und insbesondere Antiblockmittel ausgerüstet werden.

Aus EP-A-27 586, EP-A-613 771 und EP-A-189 242 geht hervor, daß als Antiblockmittel im weitesten Umfang fein verteiltes Siliciumdioxid (SiO₂) in einer Konzentration von 500 bis 5000 ppm, bevorzugt 1000 bis 4000 ppm eingesetzt wird. Dieses SiO₂-Antiblockmittel (zum Beispiel auch unter der Handelsbezeichnung SYLOBLOC 44 und 45 der Firma Grace GmbH, Worms bekannt) mit einer mittleren Partikelgrößen von 1,0 bis 6,0 µm, vorzugsweise 2,5 bis 5,0 µm verbessern das Folienreibverhalten und somit die Maschinengängigkeit, aber verschlechtert die optischen Folieneigenschaften, wie zum Beispiel die Trübung wesentlich.

Im US 4,529,764 wird über den Einsatz von Talkum, Kalkstein, Magnesium Silikat, Tonerde, Zinkoxiden und auch über Kieselsäure (SiO₂) als Antiblockmittel in Polyolefinfolien zur Verbesserung der Folienreibkoeffizienten geschrieben. Die mittlere Antiblockmittelkonzentration der jeweiligen Folienschicht liegt zwischen 500 bis 3000 ppm, bevorzugt zwischen 750 und 2500 ppm eines oder eine Mischung aus den aufgelisteten Antiblockmitteln. Auch hier wird die optische Folienqualität, wie zum Beispiel der Oberflächenglanz aufgrund der Zugabe von Antiblockmitteln wesentlich beeinträchtigt.

In DE 34 44 158 wird ein blattförmiges anorganisches Silikat, welches sich bei der biaxialen Orientierung der Folie überwiegend parallel zur Folienebene ausrichtet, als Antiblockmittel in einer Konzentration von 0,1 bis 1,0% eingesetzt. Die Kratzempfindlichkeit der Folienoberfläche, in die das blättchenförmige anorganische Silikat mit einem mittleren Teilchendurchmesser von 0,1 bis 1,0 µm eingesetzt wird, erhöht sich nicht und gleichzeitig verbessert sich das Gleitverhalten der Folie. Aber durch den Einsatz dieses Silikats als Antiblockmittel mit blattförmiger Struktur verschlechtert sich zum einen die Trübung der Folie und zum anderen wird die Siegelanspringtemperatur der Siegelschichtseite wesentlich beeinträchtigt.

In EP-A-447 652 und EP-A-353 368 wird die kugelförmige Ausführung eines vernetzten Polymerpulvers als Antiblockmittel besonders beschrieben. Das kugelförmige Antiblockmittel (in EP-A-353 368 unter dem Handelsnamen Tospearl 120, 130 und 145 der Firma Toshiba Silicone bekannt) in mindestens monoaxial gereckten Ein- und/oder Mehrschicht-Polyolefinfolien verbessern die Folienreibkoeffizienten im Vergleich zu Standardantiblockmitteln wie zum Beispiel Siliciumdioxid (SiO₂) wesentlich. Es tritt aber bei kugelförmigem Antiblockmitteln in einer Konzentration zwischen 0,01 bis 0,5% der jeweiligen Folienschicht (Außenschicht) stets eine deutliche Verschlechterung der optischen Folieneigenschaften wie z. B. der Trübung auf.

Durch die Verwendung all dieser beschriebenen Antiblockmittel verbessern sich die Folienreibkoeffizienten und somit die Maschinengängigkeit einer Polyolefin folie wesentlich, jedoch weisen die mit den genannten Antiblockmitteln in den angegebenen Konzentrationen ausgerüsteten Folien immer noch Nachteile hinsichtlich der optischen Eigenschaften, wie Trübung und Glanz auf.

Es stellt sich daher die Aufgabe, eine Folie mit wesentlich verbesserter Maschinengängigkeit unter Beibehaltung guter optischer Eigenschaften, d. h. geringer Grauschleier, hoher Oberflächenglanz und geringer Trübung, die sich besonders als Einzel- und/oder Verbundfolie für die Verarbeitung auf schnellaufenden vertikal und horizontal arbeitenden Verpackungs- und/oder Verarbeitungsmaschinen verschiedenen Typs eignen, bereit zu stellen Außerdem soll sich die Folie nach konventionellen Verfahren, bei denen mono und/oder biaxial mit Walzen und gegebenenfalls Kluppenrahmen gestreckt wird, problemlos herstellen lassen.

Gelöst wird diese Aufgabe durch eine wenigstens monoaxial gereckte Polypropylenfolie, enthaltend jeweils wenigstens ein Gleit-, ein Antistatikmittel und eine Antiblockmittelkombination, die dadurch gekennzeichnet ist, daß sie zum einen aus einem vernetzten kugelförmigen organischen Abstandshalter und zum anderen aus einem geringen Anteil anorganischen Antiblockmittel zusammengesetzt ist.

In der bevorzugten Ausführungsform handelt es sich bei der Folie um eine einschichtige transparente Folie. Bei transparenten Folien kommen die Vorteile der erfindungsgemäß zu verwendenden Antiblockmittelkombination hinsichtlich der Maschinengängigkeit bei Erhaltung der guten Optik, des sehr hohen Oberflächenglanzes, der geringen Folienreibkoeffizienten, des geringen Grauschleiers und der geringen Kratzempfindlichkeit zum Tragen. Bei der erfindungsgemäßen Antiblockmittelkombination handelt es sich um ein vernetzten kugelförmigen Abstandshalter, wie er in EP-A-447 652 beschrieben ist und um ein Siliciumdioxid (SiO₂) oder einem lamellaren SiO₂ mit einem Teilchendurchmesser von 2 bis 6 µm, bevorzugt 3,5 bis 4,5 µm mit der Handelsbezeichnung Sylobloc 44 und Sylobloc 45 der Fa. Grace.

Vorzugsweise liegt die erfindungsgemäße Antiblockmittelkombination in einem Verhältnis 1:1000 bis 1:20, bevorzugt 1:200 bis 3:100 des SiO₂-Abstandshalters zu dem vernetzten kugelförmigen Abstandshalters in der Folienschicht, in die die Antiblockmittelkombination eingearbeitet ist, vor. Bei Mehrschichtfolien beziehen sich die Verhältnis- und Mengenangaben auf die jeweiligen Außenschichten.

Wenigsten monoaxial gereckte Polypropylenfolie, enthaltend jeweils eine Antiblockmittelkombination, die dadurch gekennzeichnet ist, daß die erfindungsgemäße Antiblockmittelkombination in einem Verhältnis eines SiO₂-Abstandshalters zu einem kugelförmigen Antiblockmittel, bestehend aus Polymethacrylsäureisobutylester und Polymethacrylsäuremethylester im Molverhältnis 2,5:1, wie es in EP 0 447 652 A2 erfindungsgemäß beschriebenen ist, zusammengesetzt ist.

Überraschenderweise ist es durch die Verwendung der erfindungsgemäßen Antiblockmittelkombination in Ein- und Mehrschichtfolien gelungen, die Maschinengängigkeit unter Beibehaltung des Gleitverhaltens (DIN-Reibung), der optischen Eigenschaften, d. h. geringer Grauschleier, geringe Trübung und gleichbleibendem Glanz wesentlich zu verbessern. Desweitern war nicht zu erwarten, daß durch die Verwendung der erfindungsgemäßen Antiblockmittelkombination die Kratzempfindlichkeit nicht verschlechtert wurde.

In der bevorzugten Ausführungsform handelt es sich bei der Folie um eine einschichtige transparente Folie bestehend aus Polypropylenpolymer, welches für diesen Anwendungszweck der Folienherstellung ein übliches Polymeres ist. Übliche Polymere sind z. B. Homopolymere, inbesondere isotaktisches Polypropylen mit einem n-Heptan löslichen Anteil von maximal 15 Gew.-%, ein Copolymer des Propylens mit Ethylen oder C₄- bis C₈-Olefinen mit mindestens 90 Gew.-% Propylenanteil oder Polypropylen-Polyolefine, die unter Verwendung von Matallocen-Katalysatoren hergestellt wurden. Die üblichen Propylenpolymere haben zweckmäßigerweise einen Schmelzflußindex (MFI) von 0,5 bis 8, inbesondere 1,5 bis 4 g/10 min bei 230°C und 2,16 kp Belastung (DIN 53 735) und einen Schmelzpunkt von mindestes 140°C, vorzugsweise 150°C oder höher. Die Propylenpolymere besitzen üblicherweise eine Dichte von 0,9 bis 0,91 g/cm³.

Im Falle von Mehrschichtfolien sind die Außenschichten für die Anwendung als Kaschierfolie vorzugsweise aus dem Material der Basisschicht, d. h. aus dem Kernschichtmaterial.

Die Ausrüstung der Schichten der Ein- und/oder Mehrschichtfolie mit weiteren allgemein üblichen Additiven und Hilfsmitteln in bewährten Mengen, wie z. B. Gleit-, Antistatik- und Antiblockmitteln ist möglich. Die üblichen Additive sowie die erfindungsmäßige Antiblockmittelkombination werden bei der Folienherstellung in Form von Masterbatches und/oder Masterbatchmischungen zugegeben. Unter dem Begriff Masterbatch ist eine Mischung aus dem Kunststoffrohstoff und einer hohen Menge an Additiv zu verstehen. Die Masterbatche können nur ein einzelnes Additiv oder auch mehrere Additive enthalten. Bevorzugt werden Masterbatche mit mehreren Additiven auf Basis des jeweiligen Kunststoffrohstoffes, in die das Masterbatch eingearbeitet werden sollen.

Die Wirkung allgemein bekannter Antistatikmittel ist auf den hydrophilen Molekülteil, der mit dem langkettigen hydrophoben Kohlenwasserstoffrest verbunden ist, zurückzuführen. In den Folien richten sich die Molekülketten so aus, daß der hydrophile Teil an der Oberfläche der Folie Wasser anlagert kann, woraus eine Erniedrigung des Oberflächenwiderstandes resultiert, die letztlich die antistatische Wirkung ausmacht.

Bevorzugte Antistatikmittel sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit zwei Hydroxyalkyl-(C₁-C₄)-Gruppen substituiert sind, worunter N,N-Bis-(2-hydroxyethyl)-alkylamine mit C₁₀-C₂₀, vorzugsweise C₁₂-C₁₈ als Alkylgruppe besonders geeignet sind. Die wirksame Menge an Antistatikmittel liegt im Bereich von 0,05 bis 3,0 Gew.-%, bezogen auf die jeweilige Schicht.

Als Gleitmittel werden üblicherweise höhere aliphatische Säureamide, höhere aliphatische Säureester, Wachse und Metallfette eingesetzt. Typische Beispiele sind Erucasäureamid und Ölsäureamid, dessen üblich wirksame Menge zwischen 0,1 und 0,2 Gew.-%, bezogen auf die jeweilige Schicht, liegen. Weiterhin werden Polymere aus der Gruppe der Polyalkylsiloxane eingesetzt.

Wie aus US 4,529,764 hervorgeht, werden weitere geeignete anorganische Zusätze für Polyolefinfolien als Antiblockmittel, wie z. B. Siliciumdioxid, Talkum, Kalkstein, Calciumcarbonat, Tonerde, Kieselsäure, Zinkoxide, Magnesium Silikat, Aluminiumsilikat, Calciumphosphat und andere mehr, sowie mit dem Außenschichtmaterial unverträgliche, d. h. nicht mischbare Polymerisate, wie Polyamide, Polyester, Polycarbonate, Polymethylmethacrylat und dergleichen eingesetzt.

Üblicherweise werden Polyolefine durch Stabilisatoren gegen den thermischen Abbau während der Herstellung und der Verarbeitung zu z. B. Folien stabilisiert. Im EP-A-27 586 und der EP-A-263 882 werden bevorzugt stabilisierend wirkende Verbindungen und ihre Kombinationen für Ethylen-, Propylen- und anderen a-Olefinpolymeren beispielsweise beschrieben. Die für eine ausreichende Stabilisierung notwenige Menge beträgt im allgemeinen 0,1 bis 2,0 Gew.-% bezogen auf die jeweilige Schicht.

Die erfindungsgemäßen Folien können nach bekannten Verfahren wie Laminierung, Beschichtung oder Schmelzecoextrusion hergestellt werden. Nach der Extrusion und der Verfestigung des Dickfilms auf der Gießwalze und/oder im Wasserbad und/oder einer Kombination aus beiden wird der Film mindesten monoaxial, bevorzugt biaxial, gereckt. Dabei wird der Film in Laufrichtung (längs) in einem Verhältnis von 4:1 bis 7:1, vorzugsweise 5:1 bis 6:1 bei einer Temperatur von 120°C bis 150°C gereckt. Das Reckverhältnis quer zur Laufrichtung des Films (Querreckverhältnis) liegt in einem Bereich von 8:1 bis 12:1, bevorzugt 9:1 bis 11:1 und das Querrecken des Films wird bei einer Temperatur zwischen 130°C und 170°C vorgenommen. Dem biaxialorientierenden Prozeß (Längs- und Querstreckung) schließt sich eine thermische Fixierung des Films an. Die Thermofixierung wird üblicherweise bei 1°C bis 40°C unter der Querrecktemperatur durchgeführt.

Nach Fertigstellung des erfindungsmäßigen Films liegt eine Foliengesamtdicke von 8 bis 40 µm vor. Bei Mehrschichtfolien sind die Außenschichtdicken zwischen 0,4 und 4,0 µm, vorzugsweise zwischen 0,8 und 1,4 µm.

Die erfindungsgemäßen Polyolefin-Ein- und/oder Mehrschichtfolien sind im allgemeinen weitgehend unpolar, was das Spreiten von z. B. Druckfarben, Klebern u.a.m. auf der Folienoberfläche erschwert oder sogar unmöglich macht. Um die Benetzbarkeit und somit die Affinität zwischen den Druckfarben und/oder Klebern und der unpolaren Folienoberfläche zu erhöhen, ist es notwendig, die Folienoberfläche einer Corona-(Sprüh)-Vorbehandlung zu unterziehen. Dabei wird der Luftsauerstoff in Form von Carbonyl-, Epoxid-, Ether- und/oder Alkoholgruppen auf der Folienoberfläche eingelagert. Weitere Methoden der Vorbehandlung von Polyolefinfolien sind die Flamm-, Plasma- und Fluorvorbehandlung. Die Behandlungsintensitäten liegen im üblichen Rahmen, vorzugsweise zwischen 36 und 42 mN/m.

Die erfindungsgemäßen Folien eignen sich wegen ihrer hervorragenden Maschinengängigkeit und somit guten Gleiteigenschaften besonders für die Verarbeitung auf schnellaufenden Verpackungsmaschinen. Außerdem wird die Verarbeitung auf Trommel- und Tunnelkaschiermaschinen bei hohen Geschwindigkeiten ermöglicht.

Wegen ihrer vorzüglichen optischen Eigenschaften eignen sich die erfindungsgemäß hergestellten Folien für die Folienkaschierung, insbesondere Hochglanzkaschierung graphischer Produkte, wie Bucheinbände, Prospekteinbände, Schallplattenhüllen, Verpackungen u. a. m.

### Beispiel 1

Mittels des oben beschriebenen Coextrusionsverfahrens wird eine biaxial orientierte Polypropyleneinschichtfolie mit den bevorzugten Reckverhältnissen (längs 5:1 und quer 10:1), einer mittleren Längsrecktemperatur von 142°C und einer mittleren Querrecktemperatur von 160°C hergestellt. Die Außenseiten der einschichtigen Folie sind coronavorbehandelt. Die coextrudierte Folie hat eine Gesamtdicke von 12 µm, dessen Zusammensetzung nachfolgend beschrieben ist:
- 99,413 Gew.-%: eines Polypropylenpolymeren mit einer Dichte von 0,91 g/cm³ und einem Schmelzflußindex von 3,3 g/10 min bei 230°C und einer Belastung von 2,16 N nach DIN 53 735 bestimmt
- 0,274 Gew.-%: ethoxyliertes Amin als Antistatikmittel
- 0,065 Gew.-%: Erucasäureamid
- 0,036 Gew.-%: ethoxyliertes Fettsäureamid
- 0,21 Gew.-%: eines Antiblockmittels, bestehend aus Polymethacrylsäureisobutylester und Polymethacrylsäuremethylester im Molverhältnis 2,5:1, gemäß EP-A-447 652,
- 0,002 Gew.-%: eines SiO₂-Antiblockmittels der Bezeichnung Sylobloc 45 der Fa. Grace.

### Beispiel 2

Es wurde eine Folie mit einer Gesamtdicke von 12 µm nach dem im Beispiel 1 beschriebenem Verfahren gefertigt, jedoch änderte sich die Rohstoffzusammensetzung wie folgt:
- 99,411 Gew.-%: eines Polypropylenpolymeren mit einer Dichte von 0,91 g/cm³ und einem Schmelzflußindex von 3,3 g/10 min bei 230°C und einer Belastung von 2,16 N nach DIN 53 735 bestimmt
- 0,274 Gew.-%: ethoxyliertes Amin als Antistatikmittel
- 0,065 Gew.-%: Erucasäureamid
- 0,036 Gew.-%: ethoxyliertes Fettsäureamid
- 0,21 Gew.-%: eines Antiblockmittels, bestehend aus Polymethacryl-säureisobutylester und Polymethacrylsäuremethylester im Molverhältnis 2,5:1.
- 0,004 Gew.-%: eines SiO₂-Antiblockmittels der Bezeichnung Sylobloc 45 der Fa. Grace.

### Beispiel 3

Es wurde eine Folie mit einer Gesamtdicke von 12 µm nach dem im Beispiel 1 beschriebenem Verfahren gefertigt, jedoch änderte sich die Rohstoffzusammensetzung wie folgt:
- 99,407 Gew.-%: eines Polypropylenpolymeren mit einer Dichte von 0,91 g/cm³ und einem Schmelzflußindex von 3,3 g/10 min bei 230°C und einer Belastung von 2,16 N nach DIN 53 735 bestimmt
- 0,274 Gew.-%: ethoxyliertes Amin als Antistatikmittel
- 0,065 Gew.-%: Erucasäureamid
- 0,036 Gew.-%: ethoxyliertes Fettsäureamid
- 0,21 Gew.-%: eines Antiblockmittels, bestehend aus Polymethacryl-säureisobutylester und Polymethacrylsäuremethylester im Molverhältnis 2,5:1
- 0,008 Gew.-%: eines SiO₂-Antiblockmittels der Bezeichnung Sylobloc 45 der Fa. Grace.

### Vergleichsbeispiel 1

Es wurde eine Folie gefertigt wie in Beispiel 1, jedoch wurde das Siliciumdioxid (SiO₂) mit der Bezeichnung Sylobloc 45 der Fa. Grace nicht mit eingearbeitet, so daß sich nachfolgende Zusammensetzung ergibt:
- 99,415 Gew.-%: eines Polypropylenpolymeren mit einer Dichte von 0,91 g/cm³ und einem Schmelzflußindex von 3,3 g/10 min bei 230°C und einer Belastung von 2,16 N nach DIN 53 735 bestimmt
- 0,274 Gew.-%: ethoxyliertes Amin als Antistatikmittel
- 0,065 Gew.-%: Erucasäureamid
- 0,036 Gew.-%: ethoxyliertes Fettsäureamid
- 0,21 Gew.-%: eines Antiblockmittels, bestehend aus Polymethacryl-säureisobutylester und Polymethacrylsäuremethylester im Molverhältnis 2,5:1, wie es in EP 0 447 652 beschriebenen ist.

In der Tabelle 1 sind die Eigenschaften der einschichtigen biaxial orientierten Folien der Beispiele und des Vergleichsbeispiels zusammengefaßt.

Die Überlegenheit der erfindungsgemäß hergestellten Einschichtfolien entsprechend der Beispiele 1 bis 3 bezüglich der Wickel- und Schneidegeschwindigkeit bei gleichbleibenden Folieneigenschaften wie die DIN-Reibung Folie/Folie und Folie/Metall, die Trübung, des Grauschleiers, der Kratzempfindlichkeit und des Oberflächenglanzes geht aus der Tabelle 1 hervor. Besonders positiv ist bei der Verwendung der erfindungsgemäßen Antiblockmittelkombination, daß ein geringer Grauschleier bei gleichzeitig guter bis sehr guter Maschinengängigkeit der Beispielsfolien erreicht wird. Darüber hinaus ist die Trübung an den Folienmustern der Beispiele 1 bis 3 mit der Antiblockmittelkombination vernachlässigbar höher als am Vergleichsbeispiel.

**Tabelle 1**

| | Schneide/Wickelgeschwindigkeit | Rollenquali tät | Glanz, 20° | Trübung | Grauschlei er | Kratzempfindlichkeit | DIN-Reibung Folie/Metal | DIN-Reibung Folie/Folie |
|---|---|---|---|---|---|---|---|---|
| Beispiel 1 | 185 % | 0 | 140 | 1,5 | + | + | 0,19 | 0,32 |
| Beispiel 2 | 200 % | + | 141 | 1,6 | + | + | 0,20 | 0,33 |
| Beispiel 3 | 215 % | + | 142 | 1,7 | 0 | + | 0,21 | 0,38 |
| Vergleichsbeispiel 1 | 100 % | - | 139 | 1,4 | + | + | 0,19 | 0,28 |

### Prüfmethoden

### Wickel- / Schneidegeschwindigkeit

Die Geschwindigkeit mit der die jeweiligen Folien aus dem Beispiel 1 bis 3 geschnitten werden konnten, ohne das die Folie teleskopierte, wurde im Vergleich zum Vergleichsbeispiel 1 an zwei handelsübliche Wickelmaschinen unterschiedlichen Typs ermittelt. Die Schneide- und Wickelgeschwindigkeit des Vergleichsbeispiel 1 wird als Grundgeschwindigkeit mit 100% angenommen.

### Rollenqualität

Bei der Rollenaufmachung wurde der Schnittspiegel der jeweiligen Rollen mit einer Lauflänge von mehr als 20.000 Metern auf teleskopierte Folienlagen, d. h. auf über den Schnittspiegel hinausragende Folienlagen (Bahnverlauf) wie nachfolgend beurteilt:
- + :: Abweichungen weniger 5,0 mm
- 0 :: Abweichungen zwischen 5,0 und 15,0 mm
- - :: Abweichungen größer 15,0 mm

### Glanz 20°

Die Glanzmessung 20° wird in Anlehnung an die DIN 67 530 durchgeführt. Als Glanz wird der regulär reflektierte Lichtanteil, bezogen auf einen unter 20° zum Lot einfallenden Lichtstrahl bezeichnet. Der Glanz wird in Glanzeinheiten GE angegeben, die auf einen Schwarzglasstandard bezogen werden. Der Wert des Oberflächenglanzes sollte möglichst hoch sein.

### Trübung

Die Trübung wird hervorgerufen durch Lichtstreuung an auf der Oberfläche und im Innern der Folie verteilten Partikeln wie Gleitmittelteilchen, Antiblockmittel und Verunreinigungen, sowie an Rauhigkeiten der Oberfläche. Die Messung erfolgt nach der Prüfmethode ASTM D 1003 in % Trübung entsprechend % Haze nach ASTM-Prüfnorm D 1003-61m, Procedure A, nach Eichung des Meßgerätes mit Trübungsnormalen zwischen 0,3 und 34 % Trübung (Haze). Angestrebt sind niedrige Trübungswerte.

### Grauschleier

Werden Folienmuster in unterschiedlichen Winkeln in den Lichtkegel einer Lichtquelle (z. B. Glühbirne oder Neonlampe) gehalten, so wird das Licht an den in der Folie befindlichen Störstellen, wie z. B. Aufrisse um die Antiblockmittel, die beim Recken einer Folie entstehen, gebrochen. An Folienmustern mit großen Aufrissen wird das Licht mehr gebrochen als an Folienmustern mit kleineren Aufrissen. Der Betrachter sieht das gebrochene Licht als Grauschleier, was eine deutliche Differenzierung zwischen großen und kleinen Aufrissen der einzelnen Folienmuster aufgrund unterschiedlicher Antiblockmitteltypen erlaubt.

Für die Beurteilung der einzelnen Folienmuster mit den unterschiedlichen Antiblockkombinationan wurden vier Personen befragt. Alle vier Personen führten die Beurteilung drei mal an jeweils den miteinander zu vergleichenden Folienmuster, siehe Tabelle 1, in vertauschter Reihenfolge nach der nachfolgenden Bewertung durch:
- + :: keinen bis sehr geringen Grauschleier
- 0 :: geringer Grauschleier
- - :: sehr deutlicher Grauschleier.

### Kratzempfindlichkeit

Die Kratzempfindlichkeit der Folien wurde visuell nach dem Reiben zweier Folien zwischen Daumen und Zeigefinger beurteilt. Diese visuelle Beurteilung wurde an allen aufgeführten Folienmustern von vier Personen unabhängig durchgeführt. Jede Person wiederholte diese Prüfung in vertauschter Reihenfolge der Folienmuster drei mal. Es wurden jeweils die zu vergleichenden Folienmuster, siehe Tabelle 1, miteinander verglichen, um somit die unterschiedlich verwendeten Polymere in den Außenschichten in die Beurteilung der Kratzempfindlichkeit mit zu berücksichtigen. Die Beurteilung wurde wie folgt vorgenommen:
- + :: sehr wenig Kratzer
- 0 :: wenig Kratzer
- - :: sehr viele Kratzer

### DIN-Reibung

Zur Beurteilung der Gleitfähigkeit einer Folie wird die Prüfvorschrift DIN 53 375 (Bestimmung des Reibverhaltens) herangezogen. Die Reibungsmessung nach dieser Vorschrift dient zur Bestimmung des Verhaltens von Folien bei Reibung zweier Folien gegeneinander und der Reibung einer Folie gegen Metall. Angegeben wird die Reibzahl gemäß Definition DIN 53 375.

## Patentansprüche

1. Wenigsten monoaxial gereckte Polypropylenfolie, enthaltend jeweils eine Antiblockmittelkombination, die dadurch gekennzeichnet ist, daß die Antiblockmittelkombination in einem Verhältnis von 1:1000 bis 1:20, bevorzugt 1:200 bis 3:100 eines SiO₂-Abstandshalters zu einem kugelförmigen Antiblockmittel, bestehend aus Polymerisaten des Polymethacrylsäureisobutylester und Polymethacrylsäuremethylester, zusammengesetzt ist.

2. Folie nach Anspruch 1, dadurch gekennzeichnet, daß das SiO₂-Antiblockmittel einen mittleren Teilchendurchmesser von 2,0 bis 6,0 µm, bevorzugt 3,5 bis 4,5 µm besitzt.

3. Folie nach Anspruch 1 und/oder 2, dadurch gekennzeichnet, daß die SiO₂-Antiblockmittelmenge in der erfindungsgemäßen Antiblockmittelkombination ein Gemisch aus SiO₂-Abstandshaltern mit unterschiedlich großen mittleren Teilchendurchmessern ist.

4. Folie nach einem oder mehreren der Ansprüche 1 bis 3, dadurch gekennzeichnet, dadurch gekennzeichnet, daß die Folie transparent ist.

5. Folie nach einem oder mehreren der Ansprüche 1 bis 4, daß die Folie mit oder ohne Gleit- und/oder Antistatikmitteln ausgestattet ist.

6. Folie nach einem oder mehreren der Ansprüche 1 bis 5, dadurch gekennzeichnet, daß die Folie bei einem Mehrschichtaufbau die erfindungsgemäße Antiblockmittelkombination in mindesten einer Außenschicht enthält.

7. Folie nach einem oder mehreren der Ansprüche 1 bis 6, dadurch gekennzeichnet, daß mindestens eine Seite der Folie einer Corona-, Fluor- oder Plasmabehandlung unterzogen ist.

8. Folie nach einem oder mehreren der Ansprüche 1 bis 7, dadurch gekennzeichnet, daß die Gesamtdicke der Folie zwischen 8 und 40 µm, bevorzugt 10 und 25 µm liegt.

9. Folie nach einem oder mehreren der Ansprüche 1 bis 8, dadurch gekennzeichnet, dadurch gekennzeichnet, daß die Dicke der Außenschicht/en, gegebenenfalls unabhängig voneinander, zwischen 0,4 und 4,0 µm liegt/liegen.
